(19) **Europäisches Patentamt / European Patent Office / Office européen des brevets**

(11) **EP 2 800 957 B1**

(12) **FASCICULE DE BREVET EUROPEEN**

(45) Date de publication et mention de la délivrance du brevet:
**06.04.2016 Bulletin 2016/14**

(21) Numéro de dépôt: **12795576.3**

(22) Date de dépôt: **19.11.2012**

(51) Int Cl.:
***G01K 7/34*** *(2006.01)*

(86) Numéro de dépôt international:
**PCT/FR2012/052663**

(87) Numéro de publication internationale:
**WO 2013/102709 (11.07.2013 Gazette 2013/28)**

(54) **CAPTEUR DE TEMPERATURE CAPACITIF COMPRENANT DEUX CONDENSATEURS EN PONT DIVISEUR DE TENSION**

KAPAZITIVER TEMPERATURSENSOR MIT ZWEI KONDENSATOREN ALS EINEM SPANNUNGSTEILERBRÜCKE

CAPACITIVE TEMPERATURE SENSOR COMPRISING TWO CAPACITORS AS A VOLTAGE DIVIDER BRIDGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.01.2012 FR 1250022**

(43) Date de publication de la demande:
**12.11.2014 Bulletin 2014/46**

(73) Titulaire: **Commissariat à l'Énergie Atomique et aux Énergies Alternatives 75015 Paris (FR)**

(72) Inventeur: **ALIANE, Abdelkader F-38000 Grenoble (FR)**

(74) Mandataire: **Cabinet Laurent & Charras Le Contemporain 50 Chemin de la Bruyère 69574 Dardilly Cedex (FR)**

(56) Documents cités:
**FR-A- 1 325 126     US-A- 3 753 373**
**US-A- 3 774 089**

**Description**

**DOMAINE DE L'INVENTION**

L'invention a trait au domaine des capteurs de température, et plus particulièrement les capteurs de température capacitifs.

**ETAT DE LA TECHNIQUE**

Comme cela est connu en soi, la capacité d'un condensateur varie en fonction de la température. En mesurant cette capacité, ou toute grandeur directement associé à celle-ci, et en connaissant la relation qui lie la température à la valeur de la capacité, il est donc possible de mesurer la température du condensateur. Ce principe est à la base des capteurs de température dits « capacitifs ». L'utilisation d'un seul condensateur ne permet cependant pas d'obtenir une plage de variation de capacité suffisante pour obtenir une mesure précise de la température sur une large gamme.

Les documents FR 1 325 126 A, US 3 753 373 A et US 3 774 089 décrivent des mesures de température avec des capteurs capacitifs.

**EXPOSE DE L'INVENTION**

Le but de la présente invention est de proposer un capteur capacitif de conception simple, présentant une grande sensibilité sur une large plage de températures.

A cet effet, l'invention a pour objet un capteur de température comportant :

- un circuit capacitif comportant une borne d'entrée pour l'application d'une tension d'entrée, une borne de sortie pour la lecture d'une tension de sortie du circuit, et une borne de potentiel de référence ;
- un circuit de tension pour appliquer une tension prédéterminée à la borne d'entrée du circuit ; et
- un circuit pour lire la tension à la borne de sortie du circuit et convertir la tension lue en une mesure de température.

Selon l'invention, le circuit capacitif comporte :

- un premier condensateur, connecté entre les bornes d'entrée et de sortie, et ayant une capacité décroissante en fonction de la température ; et
- un deuxième condensateur, connecté entre la borne d'entrée et à la borne de potentiel de référence, et ayant une capacité croissante en fonction la température.

En d'autres termes, la tension de sortie du circuit capacitif suit donc la relation :

$$V_{out}(T) = \frac{C_1(T) + C_2(T)}{C_1(T)} \times V_{in}$$

où :

- $V_{in}$ est la tension entre la borne d'entrée et la borne de référence du circuit capacitif ;
- $V_{out}$ est la tension entre la borne de sortie et la borne de référence du circuit capacitif ;
- $T$ est la température du circuit capacitif ;
- $C_1$ est la capacité du premier condensateur ; et
- $C_2$ est la capacité du deuxième condensateur.

Ainsi, en mettant en oeuvre un tel montage, on obtient une très grande sensibilité sur une large plage de températures, notamment en raison des variations de la capacité $C_2$ en fonction de la température. En partant de l'expression du $V_{out}$, notamment pour les basses et moyennes fréquences, quand la température augmente, la valeur de la capacité $C_2$ augmente alors que dans le même temps la valeur de la capacité $C_1$ diminue. Ainsi, la valeur de $V_{out}$ en sortie du capteur augmente. Quand la température diminue, la valeur de la capacité $C_2$ diminue alors que dans le même temps la valeur de la capacité $C_1$ augmente, ce qui implique une diminution de la valeur de $V_{out}$ en sortie. La forte variation de la valeur du $V_{out}$ en sortie du capteur avec la variation de la température à $V_{in}$ constant implique donc une forte sensibilité. Un tel montage se comporte comme un montage amplificateur et permet de disposer d'un maximum de réponse en sortie du circuit capacitif.

Selon un mode de réalisation de l'invention, le circuit capacitif comporte un substrat isolant et un empilement formé sur le substrat comportant successivement :

- une première électrode conductrice réalisée sur le substrat ;
- une couche d'un premier diélectrique ;
- une deuxième électrode conductrice ;
- une couche d'un deuxième diélectrique ; et
- une troisième électrode conductrice,

le premier condensateur étant formé par la couche de premier diélectrique pris en sandwich entre la première électrode et la deuxième électrode, et le deuxième condensateur étant formé par la couche de deuxième diélectrique prise en sandwich entre la deuxième électrode et la troisième électrode.

Plus particulièrement:

- une première, une deuxième et une troisième pistes conductrices distinctes, comprenant chacune une plage conductrice de connexion, sont réalisées sur le substrat isolant, la première piste étant connectée à la première électrode ;
- la couche du premier diélectrique est déposée sur au moins la première électrode et une portion de la deuxième piste ;

■ la deuxième électrode métallique est déposée sur la couche de premier diélectrique au moins au droit de la première électrode et d'une portion de la deuxième piste, la deuxième électrode étant connectée à la deuxième piste au moyen d'une connexion métallique traversant la couche de premier diélectrique ;

■ la couche du deuxième diélectrique est déposée sur au moins la deuxième électrode et au droit d'une partie de la troisième piste ; et

■ la troisième électrode est déposée sur la couche de deuxième diélectrique au moins au droit de la deuxième électrode et d'une portion de la troisième piste, la troisième électrode étant connectée à la troisième piste au moyen d'une connexion métallique traversant les couches de premier et de deuxième diélectriques.

Il est ainsi obtenu un circuit compact, puisqu'il n'existe que trois électrodes pour deux condensateurs et que ceux-ci sont empilés l'un sur l'autre. Ce circuit peut présenter une large gamme de surface pour les condensateurs, notamment de grande surface, et est réalisable à l'aide de technique simple de fabrication.

Selon un mode de réalisation, le diélectrique du premier condensateur est un polymère fluoré de constante diélectrique inférieure ou égale à 2, par exemple une constante diélectrique égale à 2 ($\varepsilon_r$ = 2).

Un tel polymère fluoré présente la caractéristique d'être peu adhérent avec la deuxième électrode métallique déposée sur celui-ci, par exemple par sérigraphie d'une encre à base d'argent. Cette faible adhérence qui le caractérise permet de créer des micro-lacunes, ou « gaps, entre ce diélectrique polymère fluoré et la deuxième électrode conductrice. Ces micro-lacunes vont générer une capacité électrique variable qui sera prise en compte dans la capacité électrique totale propre du polymère fluoré. Ceci pourra permettre une très bonne sensibilité en température et aux effets tactile capacitifs

Notamment, la couche de premier diélectrique présente une épaisseur comprise entre 0,1 micromètre et 2 micromètres.

De manière avantageuse, le capteur comprend un circuit pour lire la capacitance du premier condensateur et pour convertir la capacitance lue en une mesure de température détectée sur le premier condensateur. Il est ainsi obtenu, sans composant capacitif supplémentaire, un capteur capacitif de pression.

Selon un mode de réalisation, le diélectrique du deuxième condensateur est un polymère ou un copolymère ferroélectrique, notamment du poly fluorure de vinylidène - chloro tri fluoroéthylène, ou un poly fluorure de vinylidène, ou un copolymère de l'un et/ou l'autre de ceux-ci. Un tel polymère présente de larges variations de capacité en fonction de la température. Plus particulièrement, la couche de deuxième diélectrique présente une épaisseur comprise entre 1 micromètre et 5 micromètres.

Avantageusement, le premier diélectrique est un polymère ou un copolymère ferroélectrique piézoélectrique, et le capteur comprend un circuit pour lire la tension à la borne d'entrée et pour convertir la mesure d'une pression appliquée sur les électrodes du deuxième condensateur en une tension lue. Il est ainsi obtenu, sans composant capacitif supplémentaire, un capteur capacitif tactile.

Selon un mode de réalisation, chacune des première, deuxième et troisième électrodes présente une épaisseur comprise entre 30 nanomètres et 15 micromètres.

Selon un mode de réalisation, le substrat est un substrat flexible en plastique, notamment en PEN (polyéthylène naphtalate) ou en PET (polyéthylène téréphtalate), ce qui permet de réaliser un circuit capacitif souple et d'accroitre la sensibilité du capteur de pression et du capteur tactile.

**BREVE DESCRIPTION DES FIGURES**

L'invention sera mieux comprise à la lecture de la description qui suit, donnée uniquement à titre d'exemple, et réalisée en relation avec les dessins annexés, dans lesquels des références identiques désignent des éléments identiques ou analogues, et dans lesquels :

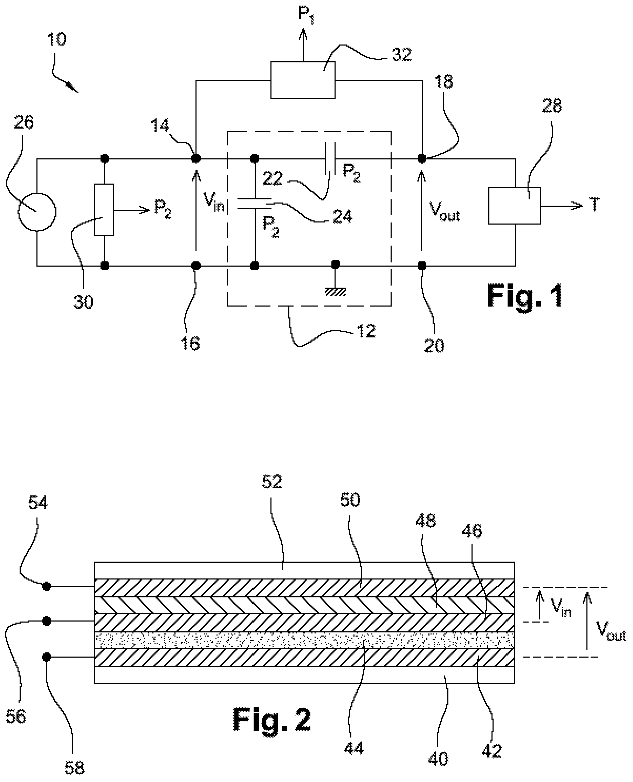

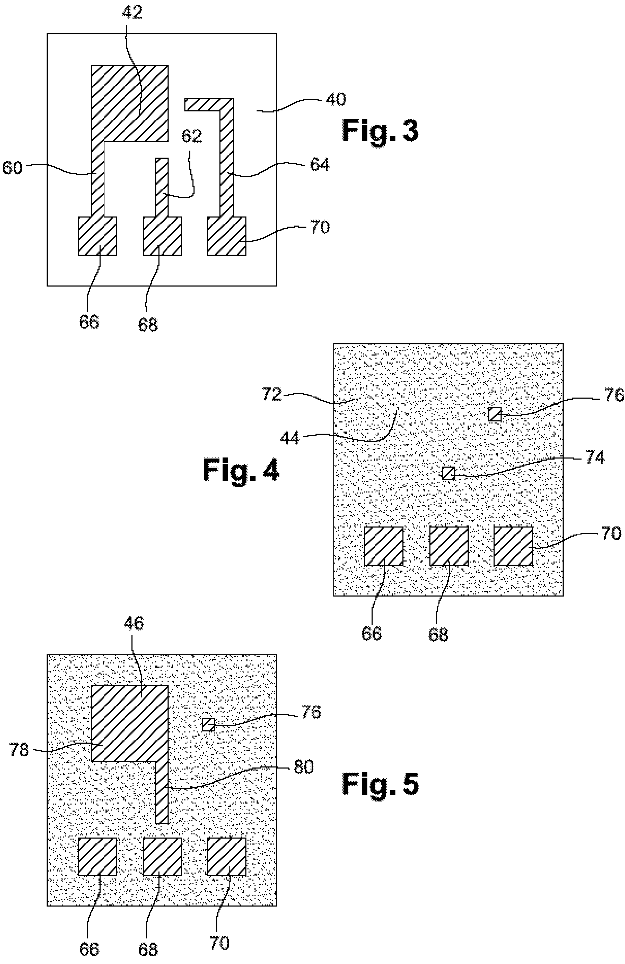

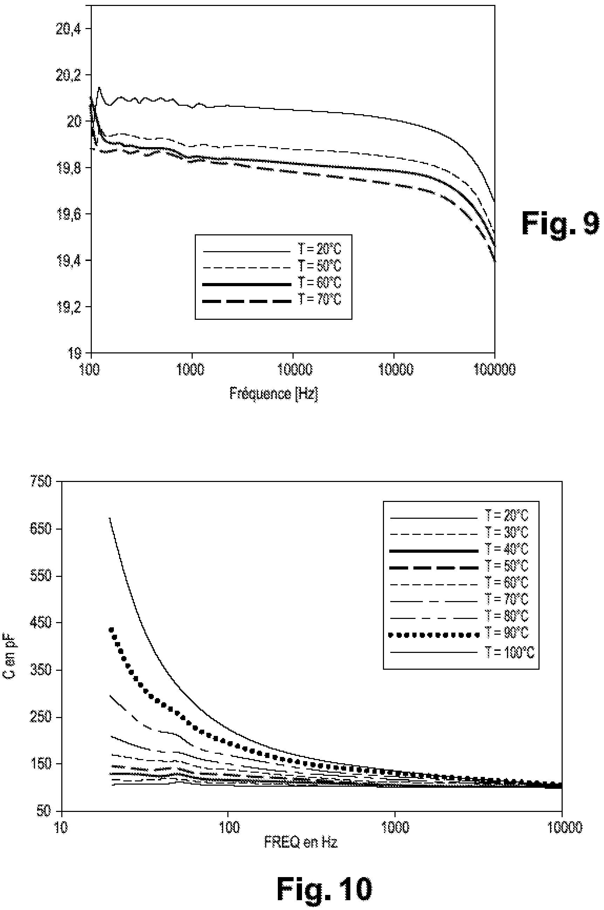

■ la figure 1 est une vue schématique d'un capteur de température selon l'invention ;
■ la figure 2 est une vue schématique en coupe d'un empilement formant les condensateurs du circuit capacitif de la figure 1 ;
■ les figures 3 à 8 sont des vues schématiques de dessus d'un procédé de fabrication d'un circuit capacitif comportant l'empilement de la figure 2 ; et
■ les figures 9 et 10 sont des tracés de la capacité du premier et du second condensateur du circuit capacitif respectivement en fonction de la fréquence et pour différentes températures.

**DESCRIPTION DETAILLEE DE L'INVENTION**

En se référant à la figure 1, un capteur de température **10** selon l'invention comprend un circuit capacitif **12** ayant deux bornes d'entrée **14, 16 et** deux bornes de sortie **18, 20,** et dont la fonction de transfert en tension entre une tension $V_{in}$ appliquée entre les bornes d'entrée **14, 16** et une tension de sortie $V_{out}$ résultante entre les bornes de sortie **18, 20** varie de manière connue en fonction de la température du circuit **12.**

Plus particulièrement, la borne d'entrée **16** et la borne de sortie **20** sont des bornes de référence et sont portées au même potentiel, par exemple un potentiel de masse, et le circuit capacitif **12** comprend un premier condensateur **22,** connecté entre la borne d'entrée **14** et la borne de sortie **18,** et un second condensateur **24,** connecté entre les bornes d'entrée **14**, **16**.

La fonction de transfert entre la tension $V_{out}$ et la tension $V_{in}$ est ainsi donnée par la relation :

$$V_{out}(T) = \frac{C_1(T) + C_2(T)}{C_1(T)} \times V_{in} \qquad (1)$$

où :

- $T$ est la température du circuit capacitif **12** ;
- $C_1$ est la capacité du premier condensateur **22** ; et
- $C_2$ est la capacité du deuxième condensateur **24**.

Le premier condensateur **22** présente une capacité qui décroit en fonction de la température T. Plus particulièrement, le premier condensateur **22** comporte un diélectrique intercalé entre deux électrodes conductrices, par exemple métalliques ou organométalliques, et constitué d'un polymère fluoré à faible constante diélectrique inférieure ou égale à 2 ($\varepsilon_r$= 2), par exemple une constante diélectrique égale à 2.

Le deuxième condensateur **24** présente une capacité qui croit en fonction de la température T. Plus particulièrement, le deuxième condensateur **24** comporte un diélectrique intercalé entre deux électrodes conductrices, par exemple métalliques ou organométalliques, et constitué d'un polymère ou un copolymère ferroélectrique.

L'expression du $V_{out}$ de la relation (1) se réécrit, pour la tension $V_{in}$ constante, selon la relation :

$$V_{out}(T) = S \times T + V_0 \qquad (2)$$

où :

- $S$ est la sensibilité du détecteur exprimée en V/°C ; et
- $V_0$ est une tension seuil.

La sensibilité S est donc égale à

$$S = \left.\frac{\partial V_{out}}{\partial T}\right|_{V_{in}=cons\tan te}$$

Le capteur de température **10** comporte en outre une source de tension **26** pour appliquer une tension prédéterminée $V_{in}$ entre les bornes d'entrée **14, 16,** ainsi qu'un circuit de lecture **28** connecté aux bornes de sortie **18, 20** pour la lecture de la tension de $V_{out}$ et l'analyse de la mesure de celle-ci.

Plus particulièrement, le circuit de lecture **28** comporte des moyens d'échantillonnage de la tension mesurée et des moyens d'interrogation d'une table de tensions en sortie mesurées en fonction de la température détectée, ladite table étant préalablement déterminée et mémorisée dans le circuit **28**.

Le diélectrique du deuxième condensateur **24** est un matériau ferroélectrique qui présente également des propriétés piézoélectriques après l'orientation des dipôles dans le matériau ferroélectrique. Ce matériau est avantageusement constitué de poly fluorure de vinylidène - chloro tri fluoro éthylène (également appelé « PVDF-CTFE »), un poly fluorure de vinylidène ou le copolymère de l'un et/ou l'autre de ceux-ci. Pour avoir les propriétés piézoélectriques, (c'est-à-dire que lorsqu'une force est exercée sur le matériau, ce dernier génère des charges électriques), il est nécessaire d'orienter les dipôles en appliquant un fort champ électrique en mode DC d'une valeur de l'ordre de 2 V/$\mu$m à 50-60°C pendant plusieurs heures. Le capteur **10** comporte un circuit **30** connecté entre les bornes **14, 16** et apte à déterminer une pression exercée sur le deuxième condensateur **22** en fonction de la tension $V_{in}$ mesurée lorsque la source de tension **26** est déconnectée des bornes d'entrée **14, 16**.

Le circuit **30** comporte par exemple des moyens d'échantillonnage de la tension mesurée et des moyens d'interrogation d'une table de pressions en fonction de la pression mesurée, ladite table étant préalablement déterminée et mémorisée dans le circuit **30**.

De manière optionnelle, le capteur de température **10** comporte également un circuit **32** connecté au premier condensateur **22** pour déterminer la température appliquée sur celui-ci. Par exemple, le circuit **32** comporte des moyens de mesure de la capacité du condensateur **22** et de détermination de la température détectée en fonction de la capacité mesurée, notamment par interrogation d'une table de pressions en fonction de la capacité préalablement déterminée et mémorisée dans le circuit **32**.

Un exemple de réalisation des condensateurs **22** et **24** est illustré sur la vue en coupe schématique de la figure 2. Sur cette figure, il est représenté un empilement formé sur un substrat isolant **40**. Le substrat **40** est avantageusement flexible et réalisé en plastique, par exemple PEN ou en PET. L'empilement comporte :

- une première électrode conductrice **42,** par exemple métallique ou organométallique, réalisée sur le substrat **40** ;
- une couche de diélectrique **44** entrant dans la constitution du premier condensateur **22**;
- une deuxième électrode conductrice **46,** par exemple métallique ou organométallique;
- une couche de diélectrique **48** entrant dans la constitution du deuxième condensateur **24** ;
- une troisième électrode conductrice **50,** par exemple métallique ou organométallique ; et
- une couche isolante d'encapsulation **52,** avantageusement flexible et réalisée avec un isolant ou un diélectrique à faible constante diélectrique, par exemple le même matériau formant la couche diélectrique **44.**

Le premier condensateur **22** est ainsi formé de la couche de diélectrique **44** prise en sandwich entre la première électrode **42** et la deuxième électrode **46.** Le deuxième condensateur **24** est quant à lui formé de la couche de diélectrique **48** prise en sandwich entre la deuxième électrode **46** et la troisième électrode **50.**

Trois bornes schématiquement illustrées aux références **54, 56, 58** sont respectivement connectées aux trois électrodes **42, 46** et **50** pour la mesure des différentes tensions.

En se référant aux figures schématiques de dessus 3 à 8, il va à présent être décrit un procédé de fabrication d'un circuit capacitif comportant un empilement tel que décrit ci-dessus.

Le procédé débute par le dépôt pleine plaque d'une couche de métal sur le substrat **40,** d'une épaisseur comprise entre 30 nm et 300 nm, par exemple une couche d'Au, de Cu, d'Ag. Le dépôt est par exemple un dépôt physique en phase vapeur (dépôt « PVD »).

Le procédé se poursuit par le retrait de portions de la couche métallique de manière à former la première électrode **42** sur le substrat **40,** ainsi que trois pistes métalliques **60, 62, 64** distinctes se terminant chacune par une plage de connexion **66, 68, 70.** La première piste **60** est réalisée dans le prolongement de l'électrode **42** (figure 3). La formation de ces éléments est par exemple réalisée au moyen d'une photolithographie ou d'une gravure par laser, la gravure par laser permettant une production à faible coût.

Une couche de premier diélectrique **72,** avantageusement une couche de polymère fluoré à faible constante diélectrique, d'une épaisseur comprise entre 0,1 micromètre et 2 micromètres, est alors déposée sur l'ensemble hormis sur les plages de connexion **66, 68, 70** et les extrémités **74, 76** des deuxième et troisième pistes **62, 64** (figure 4). Par exemple, la couche **72** est réalisée par sérigraphie. Un recuit de l'ensemble est ensuite mise en oeuvre.

Une couche métallique **78,** d'une épaisseur comprise entre 5 micromètres et 15 micromètres, par exemple une couche en Ag, est ensuite déposée, par exemple par sérigraphie, de manière à former la deuxième électrode **46** au droit de la première électrode **42,** ainsi qu'une piste métallique **80** dans le prolongement de l'électrode **46.** La piste métallique **80** est déposée au dessus de l'extrémité **74** de la deuxième piste **62** de manière à former un contact électrique avec cette extrémité (figure 5). Un recuit de l'ensemble est ensuite réalisé.

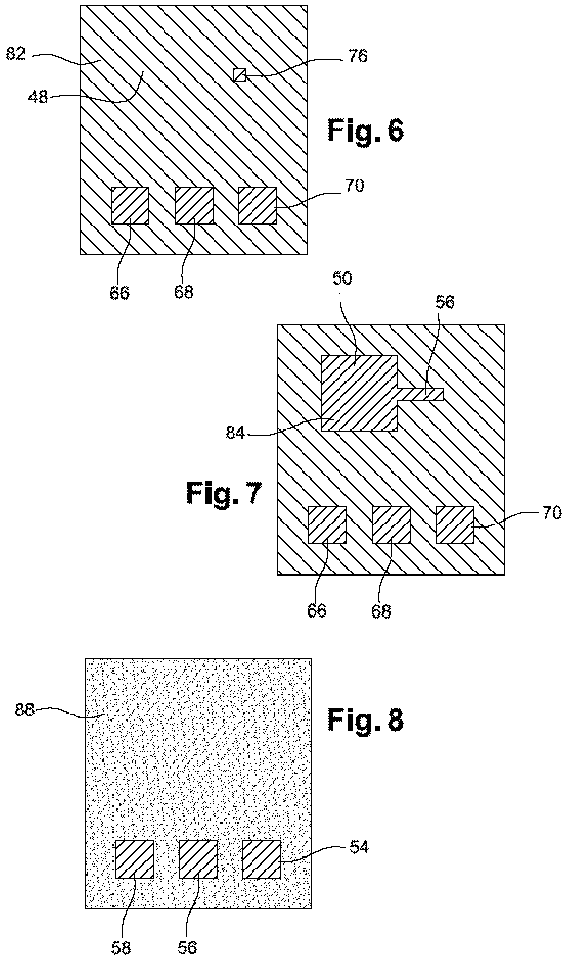

Le procédé se poursuit alors par le dépôt d'une couche de deuxième diélectrique **82,** avantageusement une couche de PVDF-CTFE, d'une épaisseur comprise entre 1 micromètres et 5 micromètres, hormis sur les plages de connexion **66, 68, 70** et l'extrémité **76** de la troisième piste **76** (figure 6). Ce dépôt est par exemple réalisé par sérigraphie au moyen d'une encre à base de PVDF-CTFE. Usuellement, le PVDF-CTFE, qui est un polymère semi-cristallin, est produit sous la forme d'une poudre. En dissolvant la poudre de PVDF-CTFE dans une solution comprenant un premier solvant, du N-M-méthyl-2-pyrrolidone (connu sous l'acronyme « NMP »), et un deuxième solvant, du méthoxy propyl acétate (connu sous l'acronyme « PMA ») avec une quantité minoritaire d'acétone, il est obtenu une encre dont la viscosité est compatible avec les techniques de dépôt par sérigraphie et de dépôt à la tournette. Une fois la couche de PVDF-CTFE déposée, un recuit de l'ensemble est réalisé.

Une couche métallique **84,** d'une épaisseur comprise entre 5 micromètres et 15 micromètres, par exemple une couche en Ag, est ensuite déposée, par exemple par sérigraphie, de manière à former la troisième électrode **50** au droit des première et deuxième électrodes **42, 46,** ainsi qu'une piste métallique **86** dans le prolongement de l'électrode **50.** La piste métallique **86** est déposée au dessus de l'extrémité **76** de la troisième piste **64** de manière à former un contact électrique avec cette extrémité (figure 7). Un recuit de l'ensemble est ensuite réalisé.

Enfin, une couche d'encapsulation est déposée sur l'ensemble, hormis sur les plages de connexion **66, 68, 70,** avantageusement une couche isolante/diélectrique flexible, par exemple le même matériau formant la couche diélectrique **44.** Une métallisation des via au dessus des plages de connexion **66, 68, 70** est alors réalisée de manière à obtenir les bornes de connexion **54, 56, 58** (figure 8).

Il est ainsi obtenu un circuit capacitif très compact et souple permettant à la fois la mesure de température et la mesure de pression. Les techniques utilisées sont en outre classiques et permettent d'obtenir, si besoin, des condensateurs plans de très larges surfaces.

La figure 9 est un tracé de plusieurs courbes de capacité du premier condensateur **42, 44, 46** en fonction de la fréquence de la tension appliquée entre les bornes **56, 58,** et pour différentes températures. La surface en regard des électrodes est dans cet exemple égale à 2 mm². Comme il est possible de le constater la valeur de la capacité diminue avec la température.

La figure 10 est un tracé de plusieurs courbes de capacité du deuxième condensateur **46, 48, 50** en fonction de la fréquence de la tension appliquée entre les bornes **54, 56,** et pour différentes températures. La surface en regard des électrodes est dans cet exemple égale à 1,77 mm². Comme il est possible de le constater la valeur de la capacité augmente avec la température.

A la vue des figures 8 et 9, il apparaît qu'en intégrant les deux condensateurs dans le circuit capacitif selon le schéma de connexion décrit ci-dessus, il est obtenu un capteur de température de grande sensibilité couvrant une plage de température d'au moins 20°C à 90°C à basse et moyenne fréquence. La tension $V_{in}$ peut être adaptable au capteur et dans le cas illustré par les courbes, son amplitude est de l'ordre de 0,5 volt à quelques volts.

## Revendications

**1.** Capteur de température (10) comportant :

- un circuit capacitif (12) comportant une borne d'entrée (14) pour l'application d'une tension d'entrée, une borne de sortie (18) pour la lecture d'une tension de sortie du circuit, et une borne de potentiel de référence (16, 18);
- un circuit de tension (26) pour appliquer une tension prédéterminée à la borne d'entrée du circuit (14) ; et
- un circuit (28) pour lire la tension à la borne de sortie (18) du circuit capacitif (12) et convertir la tension lue en une mesure de température,

*caractérisé* **en ce que** le circuit capacitif comporte :

- un premier condensateur (22) connecté entre les bornes d'entrée (14) et de sortie (18), et dont la capacité est décroissante en fonction de la température ; et
- un deuxième condensateur (24) connecté entre la borne d'entrée (14) et à la borne de potentiel de référence (16), et dont la capacité est croissante en fonction la température.

**2.** Capteur de température selon la revendication 1, *caractérisé* **en ce que** le circuit capacitif (12) comporte un substrat isolant (40) et un empilement (42-52) formé sur le substrat (40) comportant successivement :

- une première électrode conductrice (42) réalisée sur le substrat ;
- une couche de premier diélectrique (44) ;
- une deuxième électrode conductrice (46) ;
- une couche de deuxième diélectrique (48); et
- une troisième électrode conductrice (50),

le premier condensateur (22) étant formé de la couche de premier diélectrique(44) prise en sandwich entre la première électrode (42) et la deuxième électrode (46), et
le deuxième condensateur (24) étant formé de la couche de deuxième diélectrique (48) prise en sandwich entre la deuxième électrode (46) et la troisième électrode (50).

**3.** Capteur de température selon la revendication 2, *caractérisé:*

- en ce que une première, une deuxième et une troisième pistes conductrices (60, 62, 64) distinctes, comprenant chacune une plage conductrice de connexion (66, 68, 70), sont réalisées sur le substrat isolant (40), la première piste (60) étant connectée à la première électrode (42) ;
- en ce que la couche du premier diélectrique (44) est déposée sur au moins la première électrode (42) et une portion (74) de la deuxième piste (62) ;
- en ce que la deuxième électrode métallique (46) est déposée sur la couche de premier diélectrique (44) au moins au droit de la première électrode (42) et d'une portion (74) de la deuxième piste (64), la deuxième électrode (46) étant connectée à la deuxième piste (62) au moyen d'une connexion métallique traversant la couche de premier diélectrique (44) ;
- en ce que la couche du deuxième diélectrique (48) est déposée sur au moins la deuxième électrode (46) et au droit d'une partie de la troisième piste (66) ; et
- en ce que la troisième électrode (50) est déposée sur la couche de deuxième diélectrique (48) au moins au droit de la deuxième électrode (46) et d'une portion (76) de la troisième piste (66), la troisième électrode (50) étant connectée à la troisième piste (66) au moyen d'une connexion métallique traversant les couches de premier et de deuxième diélectriques (44, 48).

**4.** Capteur de température selon la revendication 1, 2 ou 3, *caractérisé* **en ce que** le premier diélectrique est un polymère fluoré de constante diélectrique inférieure ou égale à 2.

**5.** Capteur de température selon les revendications 4, *caractérisé* **en ce que** la couche de premier diélectrique présente une épaisseur comprise entre 0,1 micromètre et 2 micromètres.

**6.** Capteur de température selon la revendication 4 ou 5, *caractérisé* **en ce qu'**il comprend un circuit (32) pour lire la capacitance du premier condensateur (22) et pour convertir la capacitance lue en une mesure de température détectée sur le premier condensateur.

**7.** Capteur de température selon l'une quelconque des revendications précédentes, *caractérisé* **en ce que** le deuxième diélectrique est un polymère ou un copolymère ferroélectrique, notamment du polyfluorure de vinylidène - chloro tri fluoro éthylène, ou un polyfluorure de vinylidène, ou le copolymère de celui-ci.

**8.** Capteur de température selon la revendication 7, *caractérisé* **en ce que** la couche de deuxième diélectrique présente une épaisseur comprise entre 1 micromètre et 5 micromètres.

**9.** Capteur de température selon la revendication 7 ou 8, *caractérisé* **en ce que** le premier diélectrique est un polymère ou un copolymère ferroélectrique piézoélectrique, et **en ce que** le capteur comprend un circuit (30) pour lire la tension à la borne d'entrée (14) et pour convertir la tension lue en une mesure d'une pression appliquée sur les électrodes du deuxième condensateur (24).

10. Capteur de température selon l'une quelconque des revendications précédentes, *caractérisé* **en ce que** chacune des première, deuxième et troisième électrodes a une épaisseur comprise entre 30 nanomètres et 15 micromètres.

11. Capteur de température selon l'une quelconque des revendications précédentes, *caractérisé* **en ce que** le substrat est un substrat flexible en plastique, notamment en PEN ou en PET.

**Patentansprüche**

1. Temperaturfühler (10) bestehend aus:

   • einer kapazitiven Schaltung (12), bestehend aus einer Eingangsklemme (14) zur Anlegung der Eingangsspannung, einer Ausgangsklemme (18) zum Ablesen einer Spannung am Schaltungsausgang und einer Bezugspotentialklemme (16,18);
   • einer Netzspannung (26) zur Anlegung einer vorher festgelegten Spannung auf der Eingangsklemme (14); und
   • einer Schaltung (28) zur Ablesung der Spannung an der Ausgangsklemme (18) der kapazitiven Schaltung (12) und Umrechnung der abgelesenen Temperatur in eine Temperaturmessung,

   **dadurch gekennzeichnet, dass** die kapazitive Schaltung umfasst:

   • einen ersten Kondensator (22), der zwischen der Eingangsklemme (14) und der Ausgangsklemme (18) verbunden ist, dessen Kapazität in Abhängigkeit von der Temperatur abnimmt;
   • und einen zweiten Kondensator (24), der zwischen der Eingangsklemme (14) und der Bezugspotentialklemme (16) verbunden ist, dessen Kapazität in Abhängigkeit von der Temperatur ansteigt.

2. Temperaturfühler gemäß Anspruch 1, **dadurch gekennzeichnet, dass** die kapazitive Schaltung (12), ein isolierendes Substrat (40) sowie eine Stapelung (42-50) enthält, die auf dem Substrat (40) ausgeführt ist und nacheinander aus folgenden Elementen besteht:

   • einer ersten auf dem Substrat ausgeführten leitenden Elektrode (42);
   • einer Schicht mit einem ersten Dielektrikum (44);
   • einer leitenden Elektrode (46);
   • einer Schicht mit einem zweiten Dielektrikum (48); und
   • einer dritten leitenden Elektrode (50),

   wobei der erste Kondensator (22) aus der Schicht des ersten Dielektrikums (44), die wie in einem Sandwich zwischen der ersten Elektrode (42) und der zweiten Elektrode (46) liegt und dem zweiten Kondensator (24) gebildet wird, der aus der Schicht des zweiten Dielektrikums (48) gebildet ist, die wie in einem Sandwich zwischen der zweiten Elektrode (46) und der dritten Elektrode (50) liegt.

3. Temperaturfühler gemäß Anspruch 2, **dadurch gekennzeichnet,**

   • **dass** eine voneinander verschiedene erste, zweite und dritte Leiterbahnen (60, 62, 64) mit jeweils einer leitenden Verbindungsfläche (66, 68, 70) auf dem isolierenden Substrat (40) ausgeführt sind, wobei die ersten Bahn (60) mit der ersten Elektrode (42) verbunden ist;
   • **dass** die Schicht des ersten Dielektrikums (44) mindestens auf die erste Elektrode (42) und einen Teil (74) der zweiten Elektrode (74) der zweiten Bahn (62) aufgebracht wird;
   • **dass** die zweite Metallelektrode (46) auf der Schicht des ersten Dielektrikums (44), zumindest auf der rechten Seite der ersten Elektrode (42) und einem Teil (74) der zweiten Bahn (64) aufgebracht wird, wobei die zweite Elektrode (46) mit der zweiten Bahn (62) mittels einer Metallverbindung verbunden ist, die durch die erste Dielektrikumschicht (44) führt;
   • **dass** die zweite Dielektrikumschicht (48) mindestens auf die zweite Elektrode (46) und auf der rechten Seite eines Teils der dritten Bahn (66) aufgebracht wird; und
   • **dass** eine dritte Elektrode (50) auf der zweiten Dielektrikumschicht (48), mindestens auf der rechten Seite der zweiten Elektrode (46) und eines Teils (76) der dritten Bahn (66), aufgebracht wird, wobei die dritte Elektrode (66) mit der dritten Bahn (66) mittels einer Metallverbindung verbunden ist, die durch die erste und die zweite Dielektrikumschicht (44, 48) führt.

4. Temperaturfühler gemäß Anspruch 1, 2 oder 3 **dadurch gekennzeichnet, dass** das erste Dielektrikum ein Fluorpolymer mit einer Dielektrizitätskonstante von weniger als oder gleich 2 ist.

5. Temperaturfühler gemäß Anspruch 4 **dadurch ge-**

**kennzeichnet, dass** die Schicht des ersten Dielektrikums eine Dicke zwischen 0,1 Mikrometer und 2 Mikrometern aufweist.

6. Temperaturfühler gemäß Anspruch 4 oder 5 **dadurch gekennzeichnet, dass** er eine Schaltung (32) zum Ablesen der Kapazität des ersten Kondensators (22) und zur Umrechnung der abgelesenen Kapazität in eine Temperaturmessung, die auf dem ersten Kondensator erhoben wird, umfasst.

7. Temperaturfühler nach einem der vorangehenden Ansprüche, **dadurch gekennzeichnet, dass** das zweite Dielektrikum ein ferroelektrisches Co-Polymer oder Polymer ein ist, insbesondere Polyvinylidenfluorid-Chlor-Tri-Fluorethylen oder ein Polyvinylidenfluorid oder dessen Co- Polymer.

8. Temperaturfühler gemäß Anspruch 7 **dadurch gekennzeichnet, dass** die Schicht des zweiten Dielektrikums eine Dicke zwischen 1 Mikrometer und 5 Mikrometern aufweist.

9. Temperaturfühler, gemäß Anspruch 7 oder 8 **dadurch gekennzeichnet, dass** das erste Dielektrikum ein piezoelektrisches, ferroelektrisches Co-Polymer oder ein Polymer ist, und dass der Fühler eine Schaltung (30) zur Ablesung der Spannung an der Eingangsklemme (14) und zur Umrechnung der abgelesenen Spannung in eine Messung des Drucks, der auf die Elektroden des zweiten Kondensators (24) angewandt ist, umfasst.

10. Temperaturfühler nach einem der vorangehenden Ansprüche, **dadurch gekennzeichnet, dass** jede der ersten, zweiten und dritten Elektrode eine Dicke zwischen 30 Nanometern und 15 Mikrometern hat.

11. Temperaturfühler nach einem der vorangehenden Ansprüche **dadurch gekennzeichnet, dass** es sich bei dem Substrat um ein flexibles Kunststoffsubstrat handelt, vor allem PEN oder PET.

**Claims**

1. A temperature sensor (10) comprising:

   ▪ a capacitive circuit (12) comprising an input terminal (14) for the application of an input voltage, an output terminal (18) for the reading of an output voltage of the circuit, and a reference potential terminal (16, 18);
   ▪ a voltage circuit (26) for applying a predetermined voltage to the input terminal of the circuit (14); and
   ▪ a circuit (28) for reading the voltage at the output terminal (18) of the capacitive circuit (12) and converting the read voltage into a temperature measurement,

**characterized** in that the capacitive circuit comprises:

   ▪ a first capacitor (22), connected between the input (14) and output (18) terminals, and having a capacitance decreasing according to temperature; and
   ▪ a second capacitor (24), connected between the input terminal (14) and the terminal at the reference potential (16), and having a capacitance increasing along with temperature.

2. The temperature sensor of claim 1, **characterized in that** the capacitive circuit (12) comprises an insulating substrate (40) and a stack (42-52) formed on a substrate (40), successively comprising:

   ▪ a first conductive electrode (42) formed on the substrate;
   ▪ a first dielectric layer (44);
   ▪ a second conductive electrode (46);
   ▪ a second dielectric layer (48); and
   ▪ a third conductive electrode (50),

the first capacitor (22) being formed by the first dielectric layer (44) sandwiched between the first electrode (42) and the second electrode (46), and the second capacitor (24) being formed by the second dielectric layer (48) sandwiched between the second electrode (46) and the third electrode (50).

3. The temperature sensor of claim 2, **characterized in that:**

   ▪ a first, a second, and a third different conductive tracks (60, 62, 64), each comprising a conductive connection area (66, 68, 70), are formed on the insulating substrate (40), the first track (60) being connected to the first electrode (42);
   ▪ the first dielectric layer (44) is deposited on at least the first electrode (42) and a portion (74) of the second track (62);
   ▪ the second metal electrode (46) is deposited on the first dielectric layer (44) at least vertically above the first electrode (42) and a portion (74) of the second track (64), the second electrode (46) being connected to the second track (62) by means of a metal connection crossing the first dielectric layer (44);
   ▪ the second dielectric layer (48) is deposited on at least the second electrode (46) and vertically above a portion of the third track (66); and
   ▪ the third electrode (50) is deposited on the second dielectric layer (48) at least vertically above the second electrode (46) and a portion (76) of the third track (66), the third electrode (50) being connected to the third track (66) by means of a metal connection crossing the first and second dielectric layers (44, 48).

4. The temperature sensor of claim 2 or 3, *characterized* in that the first dielectric is a fluorinated polymer having a dielectric constant smaller than or equal to 2.

5. The temperature sensor of claim 4, *characterized* in that the first dielectric layer has a thickness in the range from 0.1 micrometer to 2 micrometers.

6. The temperature sensor of claim 4 or 5, *characterized* in that it comprises a circuit (32) for reading the capacitance of the first capacitor (22) and for converting the read capacitance into a temperature measurement detected on the first capacitor.

7. The temperature sensor of any of claim 2, 3, 4, 5 or 6, *characterized* in that the second dielectric is a ferroelectric polymer or copolymer, particularly polyvinylidene fluoride - chlorotrifluoroethylene, or a polyvinylidene fluoride, or a copolymer of one and/or the other thereof.

8. The temperature sensor of claim 7, *characterized* in that the second dielectric layer has a thickness in the range from 1 micrometer to 5 micrometers.

9. The temperature sensor of claim 7 or 8, *characterized* in that the first dielectric is a piezoelectric ferroelectric polymer or copolymer, and **in that** the sensor comprises a circuit (30) for reading the voltage at the input terminal (14) and for converting the read voltage into a measurement of a pressure applied to the electrodes of the second capacitor (24).

10. The temperature sensor of any of claims 2 to 9, *characterized* in that each of the first, second, and third electrodes has a thickness in the range from 30 nanometers to 15 micrometers.

11. The temperature sensor of any of claims 2 to 10, *characterized* in that the substrate is a flexible plastic substrate, particularly made of PEN or PET.

P₁

10

26

32

18

28

14

$V_{in}$

22

$P_2$

24

$P_2$

$P_2$

30

$V_{out}$

T

16

12

20

**Fig. 1**

54

52

50

48

46

$V_{in}$

$V_{out}$

56

44

40

42

58

**Fig. 2**

**Fig. 3**

**Fig. 4**

**Fig. 5**

Fig. 6

Fig. 7

Fig. 8

**Fig. 9**

**Fig. 10**

**EP 2 800 957 B1**

**RÉFÉRENCES CITÉES DANS LA DESCRIPTION**

**Documents brevets cités dans la description**

- FR 1325126 A
- US 3753373 A
- US 3774089 A